(19)

Europäisches
Patentamt
European
Patent Office
Office européen
des brevets

(11) **EP 1 412 715 B1**

(12) **EUROPEAN PATENT SPECIFICATION**

(45) Date of publication and mention
of the grant of the patent:
**05.09.2007 Bulletin 2007/36**

(21) Application number: **02700192.4**

(22) Date of filing: **14.02.2002**

(51) Int Cl.:
***G01J 3/453*** *(2006.01)*

(86) International application number:
**PCT/EE2002/000001**

(87) International publication number:
**WO 2002/065073 (22.08.2002 Gazette 2002/34)**

(54) **SCANNING INTERFEROMETER**

ABTASTINTERFEROMETER

INTERFEROMETRE DE BALAYAGE

(84) Designated Contracting States:
**AT BE CH CY DE DK ES FI FR GB GR IE IT LI LU
MC NL PT SE TR**

(30) Priority: **15.02.2001 EE 200100093**

(43) Date of publication of application:
**28.04.2004 Bulletin 2004/18**

(73) Proprietors:
• **T Nnisson, Teofilus
61602 Tartumaa (EE)**
• **Vince, Cecil Wilfred
Hungerford,
Berkshire RG17 OTF (GB)**

(72) Inventors:
• **T Nnisson, Teofilus
61602 Tartumaa (EE)**
• **Vince, Cecil Wilfred
Hungerford,
Berkshire RG17 OTF (GB)**

(74) Representative: **Sarap, Margus
Käosaar & Co Patent Agency
Tähe 94
50107 Tartu (EE)**

(56) References cited:
**DE-A- 2 906 015          DE-A- 3 921 816**

**Description**

TECHNICAL FIELD

This invention concerns scanning interferometers intended for use in Fourier spectrometers where an interferogram is scanned with the help of pairs of two flat parallel mirrors installed in such a way that the shoulders of both interferometers pass through the same pair of mirrors, and the pair of mirrors itself can be turned around its axis, the plane of which is parallel with the plane of mirrors that form the pair of mirrors and perpendicular to the plane formed by the optical axes of the interferometer, that way increasing the optical path in one shoulder and decreasing it in the other shoulder.

BACKGROUND ART

The scanning interferometer consisting of two mutually perpendicular flat mirrors, one of which can move along an axis that is perpendicular to its plane, has been used as the scanning unit and is known as the Michelson interferometer (P. R. Griffiths, J. A. de Haseth. Fourier transform infrared spectroscopy, Wiley&Sons, New York, 1986, p.1). Interferometer uses a beamsplitter for the division of light into two parts, and two plane mirrors for reflecting the light back to the beamsplitter. Scanning of the interferogram is achieved by moving one mirror in alternating directions along the axis which is perpendicular to its plane.

Scanning of the interferogram is also possible in case of circular motion in alternating directions where the Michelson interferometer is modified in such a way that linear motion is replaced by circular motion so that the scanning unit consists of two parallel interconnected flat mirrors capable of circular motion in alternating directions (DE 3921816 A (Wildgruber Guenther), 17.01.1991). The interferometer consists of one beamsplitter and four flat mirrors. The two parallel mirrors have been fastened to the base, forming that way the scanning unit which is capable of swinging movement in alternating directions around the axis which is on the same plane with the mirrors. The third and the fourth flat mirror are rigidly fixed and reflect the ray of light that has fallen on them back to the beamsplitter. Swinging motion around the axis creates an optical path difference in one shoulder, which brings about the possibility for the scanning of the interferogram.

Scanning of the interferogram is also possible in case of circular motion in alternating directions using rectangular glass prism - paralleliped as a scanning unit (DE 2906015 A (Polska Akademia Nauk Institut), 23.08.1979). The interferometer consists of one beamsplitter, scanning prism and two flat mirrors. The scanning prism is capable of swinging movement around the axis which is on the same plane with the large surfaces of the prism. The two flat mirror are rigidly fixed and reflect the light back to the beamsplitter.

In the interferometers described above, the path difference is scanned with the help of either linear or circular motion of the scanning unit in alternating directions, whereas the scanning unit is located in one shoulder of the interferometer. The ray of light which is in the other shoulder does not penetrate the scanning unit and therefore the shoulders of the interferometer are different. All inaccuracies of the motion that influence the scanning unit impair the quality of the interferogram.

DISCLOSURE OF INVENTION

The aim of this invention is to reduce errors occurring during scanning due to inaccuracies in the motion of the scanning unit located in one shoulder of the interferometer in such a way that both shoulders of the interferometer pass through the same scanning unit and the errors caused by its motion compensate each other.

The object of the invention is solved by the device described in claim 1.

This invention makes it possible to reduce the accuracy requirements set to the motion of the scanning unit, as the errors occurring during scanning compensate each other due to the fact that both shoulders of the interferometer pass through the same scanning unit.

The interferometer operates in such a way that a ray of light entering the interferometer is divided into two with a beamsplitter, forming that way the two shoulders of the interferometer, whereas distances between the shoulders vary with the rotation of the scanning unit around its axis. The optical path difference X which is created by the rotation of the scanning unit by the angle $\alpha$ depends on the distance L between the mirrors and is expressed in case of small angles ($\alpha < 6°$) in the first approximation as follows:

$$X \cong 6L \tan\alpha \,,$$

where X - optical path difference of the interferometer, L - distance between the mirrors of the scanning units, $\alpha$ - angle of rotation of the scanning unit.

In case of an interferometer which uses a scanning unit consisting of Dove prisms as the scanning element, the path difference $X_D$ caused by the rotation of the unit depends on the angle of rotation $\alpha$, distance between the hypotenuse faces L, refractive index of the prism material n and is expressed in case of small angles ($\alpha < 6°$); in the first approximation as follows:

$$X_D \cong 6 \, nL \tan\alpha \,,$$

where $X_D$ - optical path difference of the interferometer, L - distance between the hypotenuse faces of the prisms, n - refractive index of the prisms, $\alpha$ - angle of rotation of the scanning unit.

BRIEF DESCRIPTION OF THE FIGURES

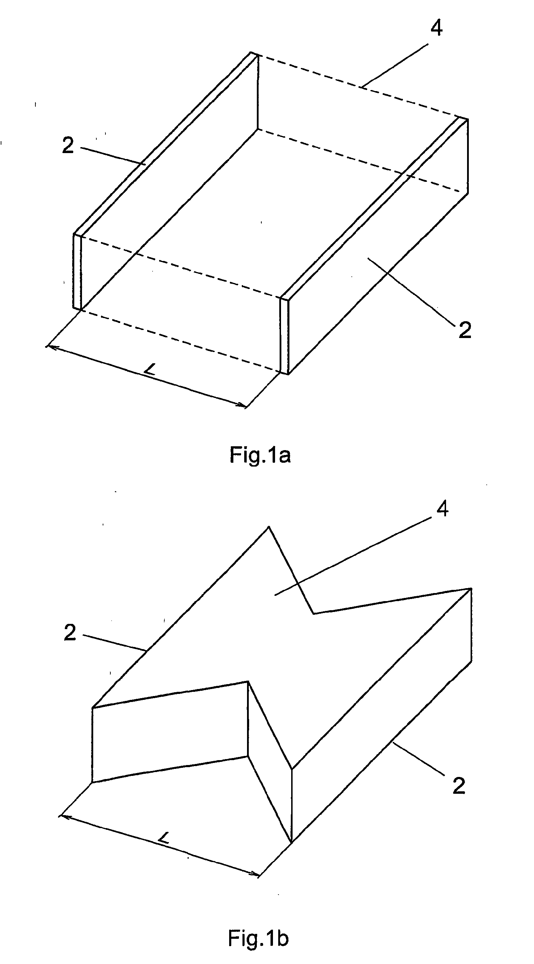

Fig. 1a shows a scanning unit consisting of two flat mirrors.

Fig. 1b shows a scanning unit consisting of Dove prisms.

Fig. 2 shows an optical scheme of an interferometer with a scanning unit consisting of flat mirrors.

Fig. 3 shows an optical scheme of an interferometer with a scanning unit consisting of Dove prisms.

Fig. 4a is a 3D image of an interferometer with one input and one output where a ray of light passes through the interferometer for four times.

Fig. 4b is a side view of an interferometer with one input and one output where a ray of light passes through the interferometer for four times.

Fig. 4c is a top view of an interferometer with one input and one output where a ray of light passes through the interferometer for four times.

Fig. 5a is a 3D image of an interferometer with two inputs and two outputs where a ray of light passes through the interferometer for four times.

Fig. 5b is a top view of an interferometer with two inputs and two outputs where a ray of light passes through the interferometer for four times.

Fig. 5c is a side view of an interferometer with two inputs and two outputs where a ray of light passes through the interferometer for four times.

Fig. 6a is a 3D image of an interferometer with one input and one output where a ray of light passes through the interferometer for eight times.

Fig. 6b is a top view of an interferometer with one input and one output where a ray of light passes through the interferometer for eight times.

Fig. 6c is a side view of an interferometer with one input and one output where a ray of light passes through the interferometer for eight times.

Fig. 7a is a side view of an interferometer with two inputs and two outputs where a ray of light passes through the interferometer for four times.

Fig. 7b is a side view of an interferometer with one input and one output where a ray of light passes through the interferometer for eight times.

EXAMPLE

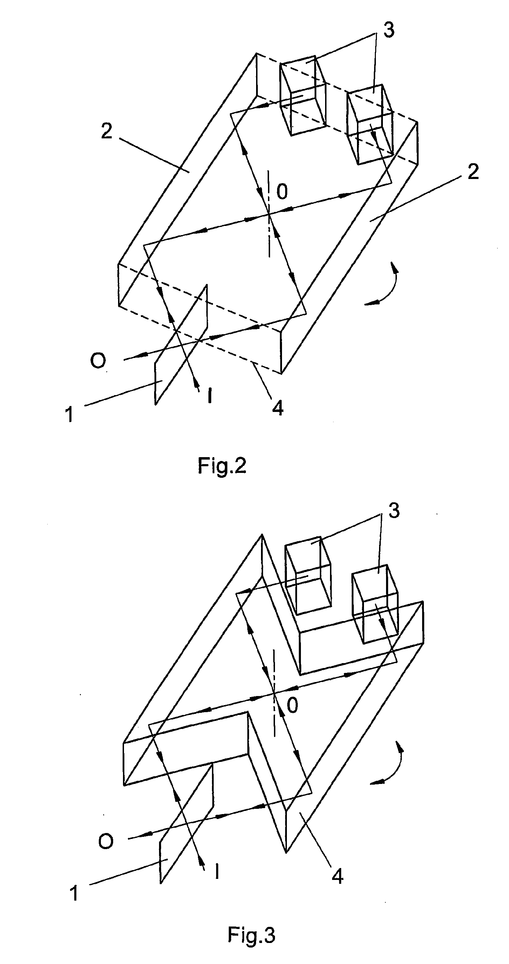

Scanning interferometer (Fig. 2), which consists of a beamsplitter 1, two flat mirrors 2 and two reflectors 3. The flat mirrors 2, which are parallel to each other and have facing reflecting surfaces, have been connected to form a rigid scanning unit 4 capable of circular motion in alternating directions around axis 0, which is parallel to the plane of mirrors 2. Reflectors 3 can be either flat mirrors, V-shaped (roof-shaped) or cube corner reflectors for reflecting a ray of light back exactly along the same optical axis along which it fell on the reflector. Instead of a scanning unit consisting of two flat mirrors, the scanning interferometer can also use a scanning unit consisting of two Dove prisms (Fig. 3). All optical schemes presented in this application with respect to scanning interferometer apply equally to both a scanning unit consisting of flat mirrors and to a scanning unit consisting of Dove prisms. For the sake of simplicity, most optical schemes have been presented using the example of a scanning unit consisting of flat mirrors.

A ray of light entering an interferometer is divided into two parts with the help of the beamsplitter I in such a way that the divided rays fall on mirrors 2, from there on reflectors 3, reflect back from reflectors 3 and merge again on beamsplitter 1.

The operation of the unit, i.e scanning of an interferogram, takes place during the rotation of scanning unit 4 around axis 0, which increases the optical path in one shoulder and decreases the optical path in the other shoulder of the interferometer.

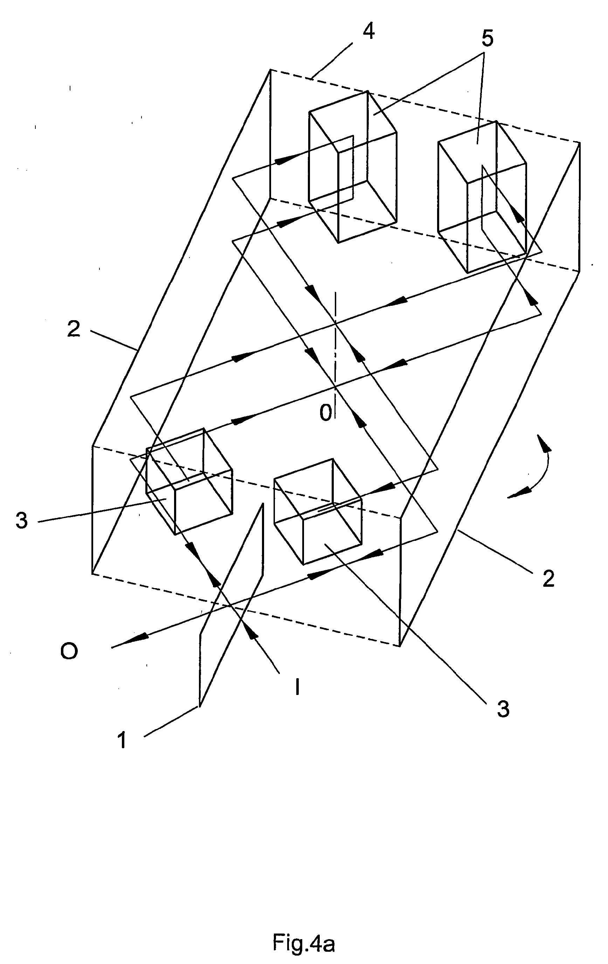

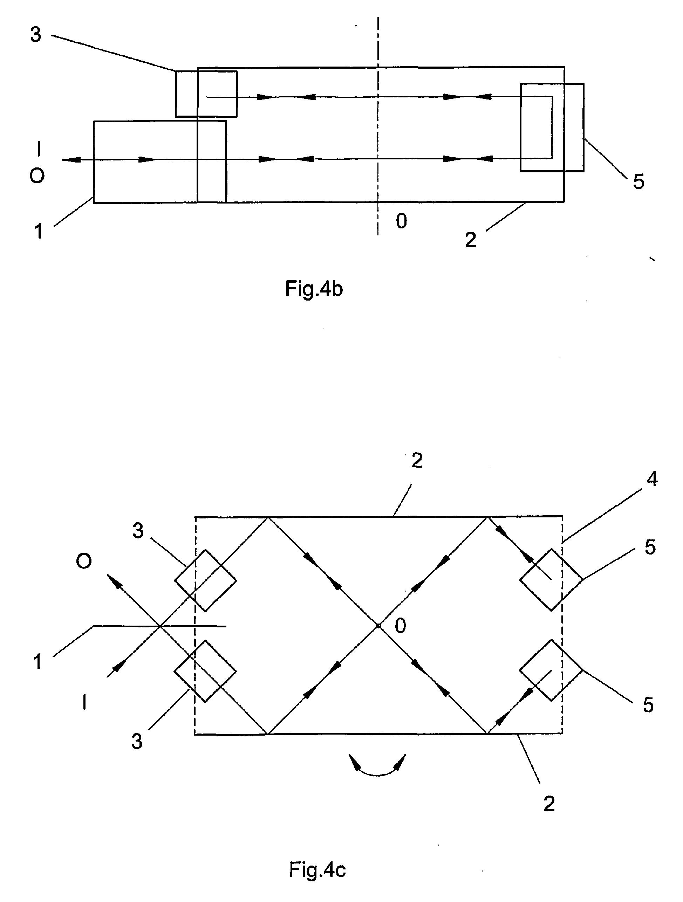

Fig. 4 is an optical scheme of the interferometer which contains both the reflector 3 and the reflector 5, whereas the use of the reflector 5 makes the ray of light pass through the interferometer for four times. Reflectors 5 can be either roof-shaped or cube corner reflectors for shifted reflection of the ray of light, i.e reflectors that direct a ray of light that has fallen on them in such a way that the optical axes of the fallen and reflected rays are parallel with each other and having a certain distance $\Delta$ between them. In such a case a ray of light returns in parallel with its original direction but with a certain spatial parallel shift $\Delta$. The shift $\Delta$ can be either in the vertical or in the horizontal direction.

A ray of light which is divided into two with the help of a beamsplitter 1 passes through the scanning unit 4 and falls on the reflector 5 in such a way that the light proceeds through the scanning unit 4 to reflector 3, which directs the ray exactly back along its original way onto the beamsplitter 1. Dependence of the optical path difference X on the angle of rotation $\alpha$ if such a ray of light passes through the interferometer for four times is expressed as follows:

$$X_4 \cong 2(6L \tan\alpha) ,$$

where $X_4$ - optical path difference in interferometer if a ray of light passes through it for four times, L - distance between mirrors of the scanning unit, $\alpha$ - angle of rotation of the scanning unit.

Analogously, it is possible to make a ray of light pass through the interferometer for 6, 8, 10....k times. In such a case the path difference of the interferometer has the following relationship with the angle of rotation of the scanning unit:

$$X_k \cong (k/2)(6L \tan\alpha) ,$$

where $X_k$ - optical path difference of the interferometer if a ray of light passes through it for k times, L - distance between mirrors in the scanning unit, $\alpha$ - angle of rotation of the scanning unit.

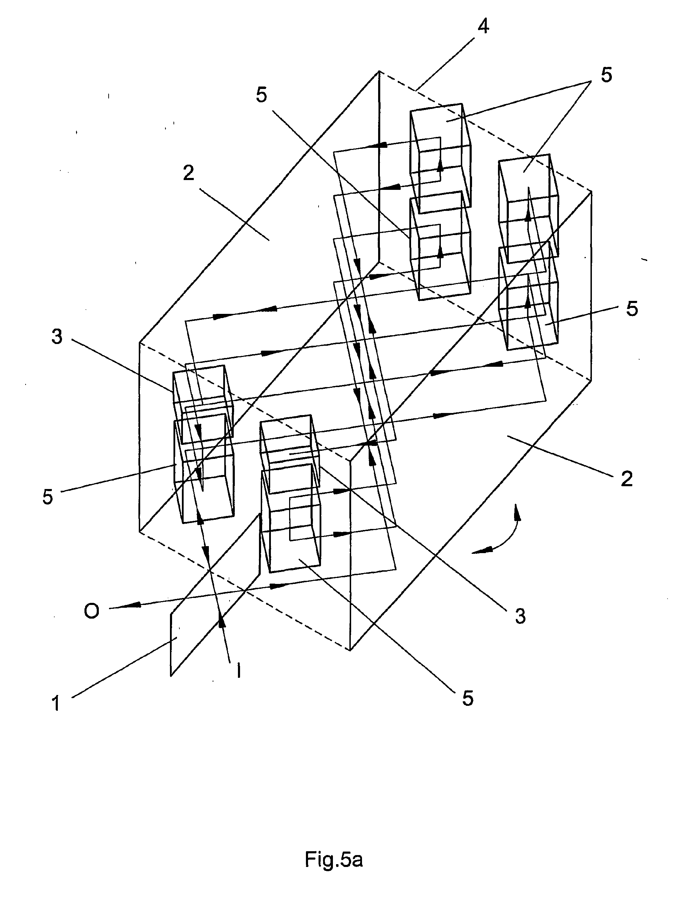

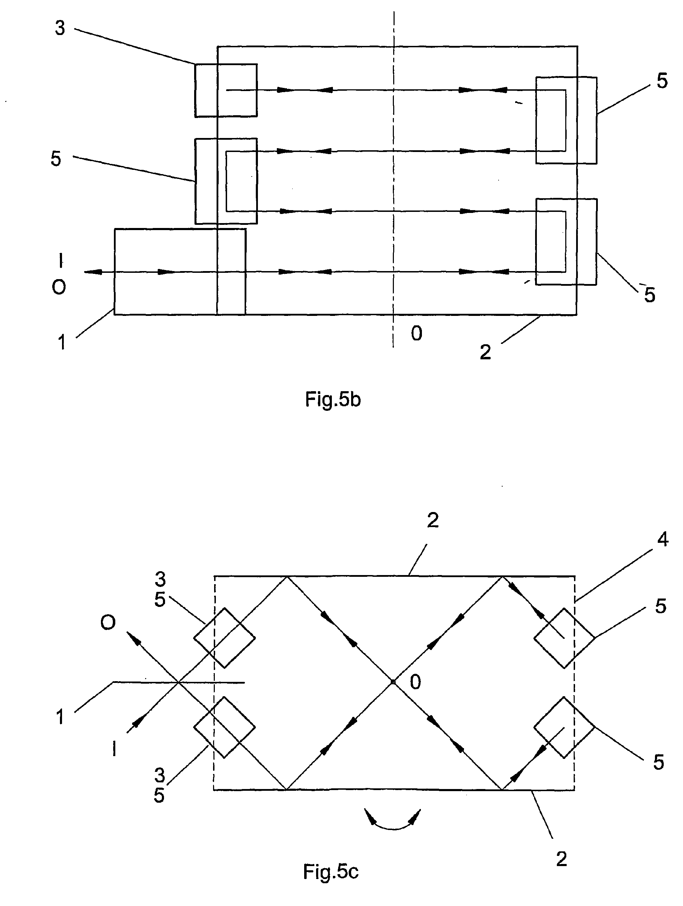

Fig. 5 a,b,c are three drawings of the interferometer where both the reflector 3 and reflector 5 are used as reflectors in such a way that a ray of light passes through the interferometer for eight times and exits from the same point in space from where it entered the interferometer, i.e. the interferometer has one input and one output.

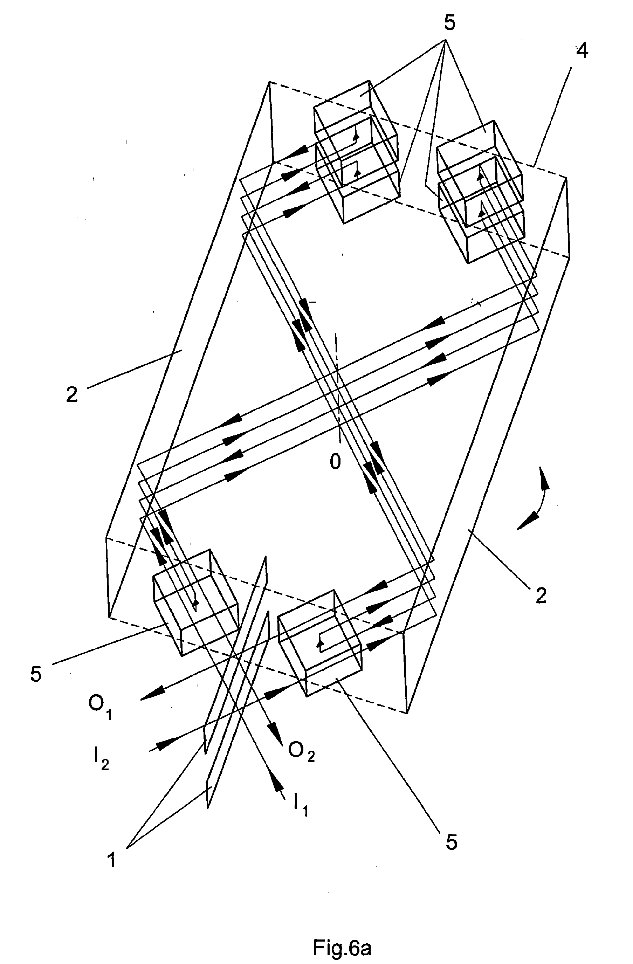

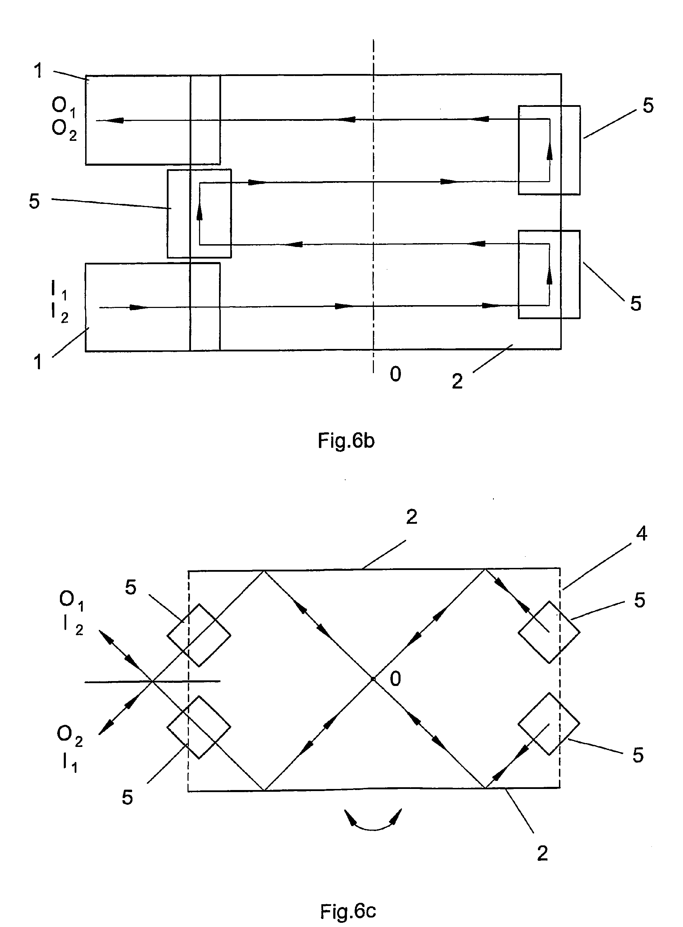

Fig. 6 a,b,c are three drawings of the interferometer where only reflector 5 is used as a reflector in such a way that a ray of light passes through the interferometer for four times, whereas the rays of light leaving the interferometer merge at a new place which is spatially shifted with respect to the input. In such a case, two inputs ($I_1$ and $I_2$) and two outputs ($O_1$ and $O_2$) are formed in the scanning interferometer. A ray of light can pass through the interferometer also for 6, 8, 10 ...k times depending on how many times it is directed through the interferometer. Regardless of the number of times it passes through, in case of using reflector 5 the input and output of the interferometer remain spatially separate.

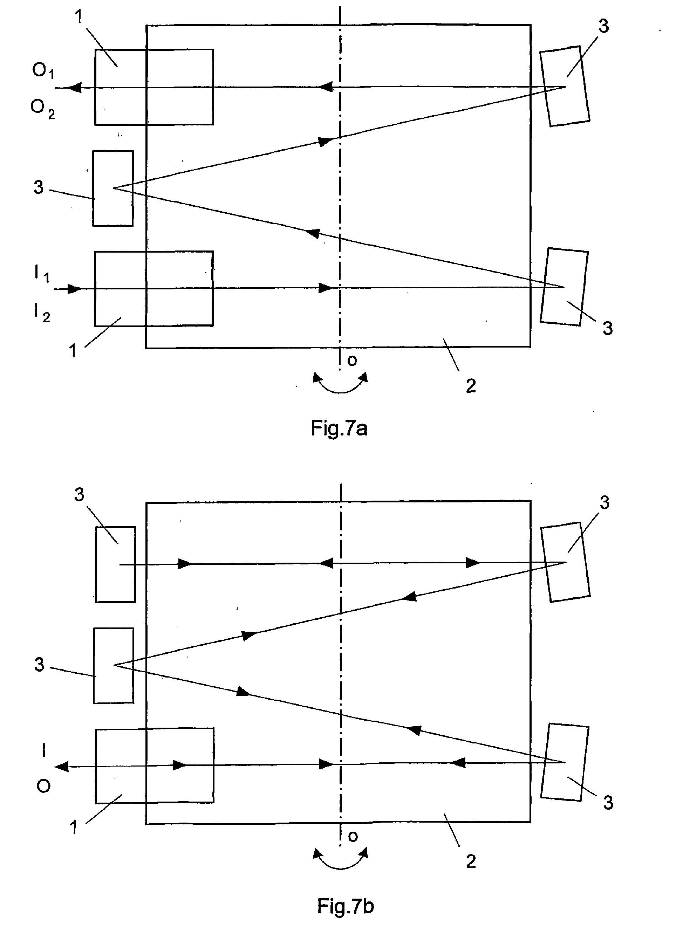

Fig. 7 a,b are two drawings of the interferometer where reflectors 3 are used is such a way that a ray of light passes through the interferometer k times and exits either through spatially separated output from input or from the same point in space where it entered the interferometer.

**Claims**

1. Scanning interferometer consisting of at least one beamsplitter (1), a scanning unit (4) of two flat mirrors (2) which are parallel to each other and capable of rotating around an axis (0) which is parallel to the planes of the mirrors, and two reflectors (3), **characterised by** the fact that the scanning unit (4) consists of two trapezoid Dove prisms, optically and mechanically interconnected along the shorter base of the trapezoid, whereas the hypotenuse faces of both Dove prisms are the plane-parallel mirrors, and that the device is configured to scan the path difference by rotation of the prisms around the axis (0).

2. Interferometer according to claim 1, **characterised by** the fact that the reflector (3) can be either a flat mirror, V-shaped roof mirror or cube corner mirror which reflects a ray of light fallen on it back along exactly the same optical axis along which the ray fell on the reflector.

3. Interferometer according to claim 1, **characterised by** the fact that a reflector (3) can be either a V-shaped roof mirror or a cube corner mirror which reflects a fallen ray of light back with a shift in such a way that the optical axes of the fallen and reflected rays are parallel to each other, but at a certain distance $\Delta$ between them in space, whereas the shift $\Delta$ may be either in the vertical or the horisontal direction and its minimum extent is determined by the diameter of the ray of light used in the interferometer.

4. Interferometer according to claims 1 and 3, **characterised by** the fact that the output of the interferometer is spatially separated from the input of the interferometer, which makes it possible to form two inputs from different directions and two outputs to different directions in the interferometer.

5. Interferometer according to claims 1, 3 and 4, **characterised by** the fact that for the merging of rays leaving the interferometer, another beamsplitter has been placed in the output which is spatially separated from the input.

6. Interferometer according to claims 1, 2, 3, 4 and 5, **characterised by** the fact that reflectors (3) have been installed in both shoulders of the interferometer in such a way that they make it possible for a ray of light to pass through the interferometer for k times, whereas k is equal to or more than two.

**Patentansprüche**

1. Das Interferometer des Scanners besteht mindestens aus einem Strahlschneider (1), aus einem Scangerät mit zwei flachen Spiegeln (2), die zueinander parallel liegen und sich um die Achse drehen, die parallel zur Spiegelfläche und zu zwei Reflektoren (3) liegen, **dadurch gekennzeichnet, dass** das Scangerät (4) aus zwei Dove-Trapezprismen besteht, die optisch und mechanisch an der kürzeren Trapezseite einander gegenüber verbunden sind, wenn die Hypotenusenseiten der beiden Dove-Prismen zugleich die Funktion der flachparallelen Spiegeln haben, und bei der Prismenrotation um die Achse (0), die parallel zur horizontalen Hypotenusenseite ist, der Wegunterschied kann durch die Prismenrotation die Achse entlang scanniert werden, die parallel zur Hypotenusenseite ist.

2. Das interferometer nach Anspruch 1, **dadurch gekennzeichnet, dass** als Reflektor (3) können ein flacher Spiegel, ein V-förmiger Doppelspiegel oder ein Reflektorspiegel sein, die einen gespiegelten Lichtstrahl genau entlang derselben optischen Achse, entlang deren der Strahl am Reflektor gespiegelt wurde, zurückstrahlt.

**3.** Das interferometer nach Anspruch 1, **dadurch gekennzeichnet, dass** der Reflektor (3) kann ein V-förmiger Doppelspiegel oder ein Reflektorspiegel sein, der den gespiegelten Lichtstrahl in dieser Weise zurückstrahlt, daß die optische Achse der gespiegelten und zurückgeworfenen Strahlen zueinander parallel ist, aber im gewissen Abstand Δ zwischen ihnen im Raum, dabei kann die Bewegung Δ in senkrechter oder in horizontaler Richtung sein und ihre minimale Reichweite ist durch den Diameter des Lichtstrahls im Interferometer bestimmt.

**4.** Das interferometer nach den Ansprüche 1 und 3, **dadurch gekennzeichnet, dass** der Ausgang des Interferometers vom Eingang räumlich getrennt ist, die ermöglicht zwei Eingänge unterschiedlicher Richtung und zwei Ausgänge unterschiedlicher Richtung im Interferometer zu bilden.

**5.** Das interferometer nach den Ansprüche 1, 3 und 4, **dadurch gekennzeichnet, dass** vor dem Zusammentreffen der Lichtstrahlen beim Verlassen des Interferometers befindet sich der andere Strahlschneider im Ausgang, der räumlich vom Eingang getrennt ist.

**6.** Das interferometer nach den Ansprüche 1, 2, 3, 4 und 5, **dadurch gekennzeichnet, dass** die Reflektoren in beiden Schultern des Interferometers in dieser Weise installiert sind, daß das den Lichtstrahl k mal durch das Interferometer auszusenden ermöglicht, dabei ist k gleicwertig oder mehr als zwei.

**Revendications**

**1.** L'interféromètre composé d'au moins un séparateur de faisceau (1), d'une unité scanner à deux miroirs plats (2), qui sont parallèles l'un à l'autre et susceptible de tourner autour de l'axe qui est parallèle aux plans des miroirs, et de deux réflecteurs (3), **caractérisé par le fait que** l'unité scanner (4) est composée de deux prismes de Dove trapézoïdaux, qui sont optiquement et mécaniquement interconnectés le long de la base courte du trapèze, alors que les hypoténuses des deux prismes de Dove fonctionnent comme des miroirs à plan-parallèles, et en cas de rotation des prismes autour de l'axe (0) qui est parallèle au niveau des hypoténuses, la différence de la distance peut être scannée par la rotation des prismes le long de l'axe qui est parallèle aux hypoténuses.

**2.** L'interféromètre selon la revendication 1, **caractérisé en ce que** le fait que le réflecteur (3) peut être soit un miroir plat, soit un miroir diédrique en forme de V, soit un miroir en forme de trièdre trirectangle, qui reflète un rayon de lumière tombé sur lui exactement le long du même axe optique le long duquel le rayon est tombé sur le réflecteur.

**3.** L'interféromètre selon la revendication 1, **caractérisé en ce que** le fait que le réflecteur (3) peut être soit un miroir diédrique en forme de V, soit un miroir en forme de trièdre trirectangle, qui reflète un rayon de lumière tombé avec un changement de sorte que l'axe optique du rayon tombé et celui du rayon reflété sont parallèles l'un à l'autre, mais dans l'espace il y a une certaine distance Δ entre eux, le changement Δ pouvant être soit dans la direction verticale, soit dans la direction horizontale et son extension minimum étant déterminée par le diamètre du rayon de lumière utilisé dans l'interféromètre.

**4.** L'interféromètre selon les revendications 1 et 3, **caractérisé en ce que** le fait que le rayon qui sort de l'interféromètre est séparé dans l'espace du rayon qui entre dans l'interféromètre, ce qui permet de former deux rayons entrant qui proviennent de directions différentes et deux rayons sortants qui partent dans des directions différentes.

**5.** L'interféromètre selon les revendications 1, 3 et 4, **caractérisé en ce que** le fait qu'en vue de la fusion des rayons sortant de l'interféromètre, un autre séparateur de faisceau a été placé à la sortie, qui est séparé de l'entrée dans l'espace.

**6.** L'interféromètre selon les revendications 1, 2, 3, 4 et 5, **caractérisé en ce que** le fait que les réflecteurs ont été installés dans les deux épaules de l'interféromètre de manière à permettre au rayon de lumière de traverser l'interféromètre k fois, k étant égal ou supérieur à deux.

Fig.1a

Fig.1b

Fig.2

Fig.3

Fig.4a

Fig.4b

Fig.4c

Fig.5a

Fig.5b

Fig.5c

Fig.6a

Fig.6b

Fig.6c

Fig.7a

Fig.7b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 3921816 A

- DE 2906015 A

### Non-patent literature cited in the description

- **P. R. GRIFFITHS ; J. A. DE HASETH.** Fourier transform infrared spectroscopy. Wiley&Sons, 1986, 1